Europäisches Patentamt

European Patent Office

Office européen des brevets

(11) Publication number: **0 098 170**
**B1**

(12) **EUROPEAN PATENT SPECIFICATION**

(45) Date of publication of patent specification: **23.08.89**

(51) Int. Cl.⁴: **G 06 F 13/00**

(21) Application number: **83303787.2**

(22) Date of filing: **30.06.83**

(54) Access control processing system in computer system.

(30) Priority: **30.06.82 JP 112862/82**
**06.09.82 JP 154950/82**

(43) Date of publication of application:
**11.01.84 Bulletin 84/02**

(45) Publication of the grant of the patent:
**23.08.89 Bulletin 89/34**

(84) Designated Contracting States:
**DE FR GB**

(56) References cited:
**WO-A-81/02210**
**FR-A-2 108 677**
**US-A-3 445 820**
**US-A-3 705 388**
**US-A-3 964 054**

(73) Proprietor: **FUJITSU LIMITED**
**1015, Kamikodanaka Nakahara-ku**
**Kawasaki-shi Kanagawa 211 (JP)**

(72) Inventor: **Nishida, Hidehiko c/o FUJITSU**
**LIMITED**
**Patent Department 1015 Kamikodanaka**
**Nakahara-ku Kawasaki (JP)**
Inventor: **Koshino, Minoru c/o FUJITSU**
**LIMITED**
**Patent Department 1015 Kamikodanaka**
**Nakahara-ku Kawasaki (JP)**
Inventor: **Tateishi, Terutaka c/o FUJITSU**
**LIMITED**
**Patent Department 1015 Kamikodanaka**
**Nakahara-ku Kawasaki (JP)**
Inventor: **Hattori, Akira c/o FUJITSU LIMITED**
**Patent Department 1015 Kamikodanaka**
**Nakahara-ku Kawasaki (JP)**
Inventor: **Tsuchimoto, Takamitsu c/o FUJITSU**
**LIMITED**
**Patent Department 1015 Kamikodanaka**
**Nakahara-ku Kawasaki (JP)**
Inventor: **Shimizu, Kazuyuki c/o FUJITSU**
**LIMITED**
**Patent Department 1015 Kamikodanaka**
**Nakahara-ku Kawasaki (JP)**

Courier Press, Leamington Spa, England.

**EP 0 098 170 B1**

(74) Representative: **Sunderland, James Harry et al HASELTINE LAKE & CO Hazlitt House 28 Southampton Buildings Chancery Lane London WC2A 1AT (GB)**

EP 0 098 170 B1

## Description

The present invention relates to an access request control system for a case in which one or more access requesting units in a computer system can make an access to a memory, in more detail, to a memory comprising a high speed small capacity buffer storage (BS) and low speed large capacity main storage (MS).

Access to storage has been handled in accordance with the following procedures. Access request information from an access requesting unit is first set in a corresponding register and when a plurality of access request compete for access to storage one of the access requests is selected in accordance with a priority determination procedure, and BS is first accessed depending on the access information of the selected access request. If BS does not hold the desired data, MS is accessed. For the access to MS, a considerable amount of time is required as compared with an access to BS.

In present systems, an access request is held in the corresponding register until MS is accessed (if MS access is needed) and the access requesting unit involved cannot issue a next access request during the waiting period for access to MS. Therefore, even when data relating to the next access request data exists in BS, such data in BS cannot be accessed until the preceding MS access is complete, and accordingly efficiency becomes bad. One such system is desclosed in US—A—3 705 388.

It is an object of this invention to offer improvement in relation to the above-mentioned disadvantage and, more practically, to make possible an access to BS on the basis of a next access request from an access requesting unit even while an access to MS, requested from the same access requesting unit, is requested from the same access requesting unit, is being effected.

For this purpose, in this invention access request information is transferred to a register for access to MS at a stage at which MS access becomes necessary and a register for access to BS is released.

Brief description of the drawings

Fig. 1 is a block diagram indicating an embodiment of this invention.

Fig. 2 is a detail schematic diagram of the priority determination circuit of BS shown in Fig. 1.

Fig. 3 is a detail schematic diagram of the priority determination circuit of MS shown in Fig. 1.

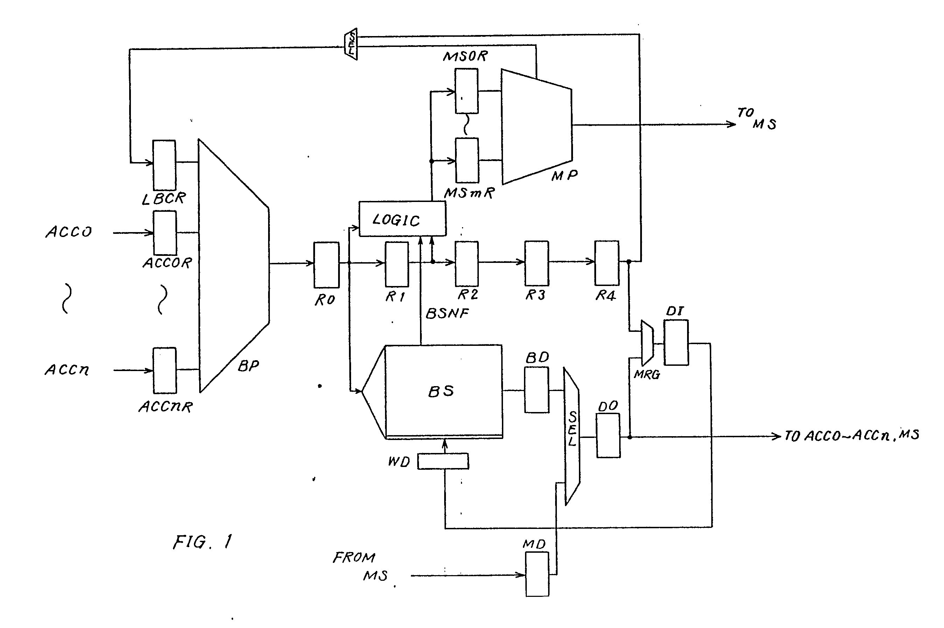

Fig. 1 is a block diagram of an embodiment of this invention. ACCO to ACCn are respective access requesting units. ACCOR to ACCnR are respective corresponding BS access registers. LBCR is a loop back register. Each acccess (access request) is subject to selection in a BS priority determination circuit (BP) and then accesses BS. If the requested operand, the subject of an access, is not in BS, the access request information is sent to MS access registers MSOR to MSmR by means of a BSNF (BS not found) signal. Here the registers MSOR to MSmR may be registers $m+1$ in number common to the access requesting units or may be a plurality of registers corresponding to respective access requesting units (one or more register may correspond to one access requesting unit). When an access is sent to MSOR to MSmR, the BS access register of the corresponding access requesting unit is released and becomes ready to accept a next access. An access sent to MSOR to MSmR is again subject to selection in an MS priority determination circuit MP, and then accesses MS. On the other hand the BS access registers ACCOR to ACCnR can be used for access to BS in accordance with priority determination taking into consideration a newly accepted access (the next access request from the access request-ing unit whose previous request has been set in MSOR to MSmR).

In a case in which MSOR to MSmR are used in common by the access requesting units, if MSOR to MSmR become busy, an access encountering BSNF during BS access is nullified until one or more MS registers becomes vacant. In a case in which an MS register is placed in a waiting condition corresponding to each access requesting unit, the access request is nullified until the corresponding MS register becomes vacant.

In Fig. 1, R0 to R4 are registers forming a pipeline. BD is a read data register of BS. WD is a write data register of BS. MD is a read data register of MS. DO, DI are data registers. SEL is a selector. MRG is a merge circuit to be used at the time of partial write. Operations in relation to BS are already known and not related directly to this present invention. Therefore these operations are not described in this specification.

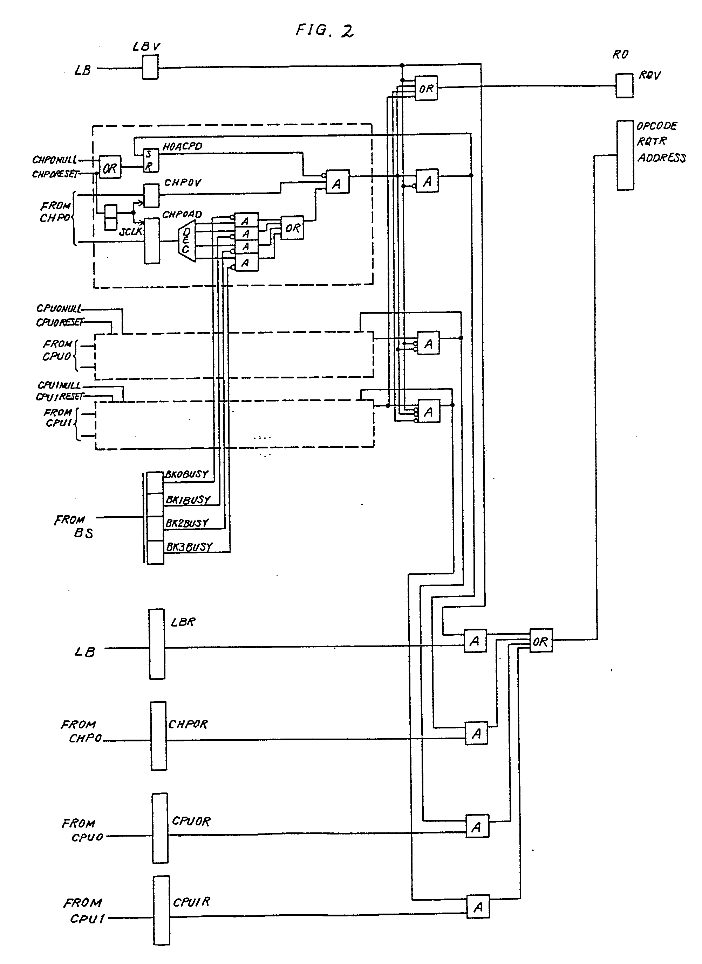

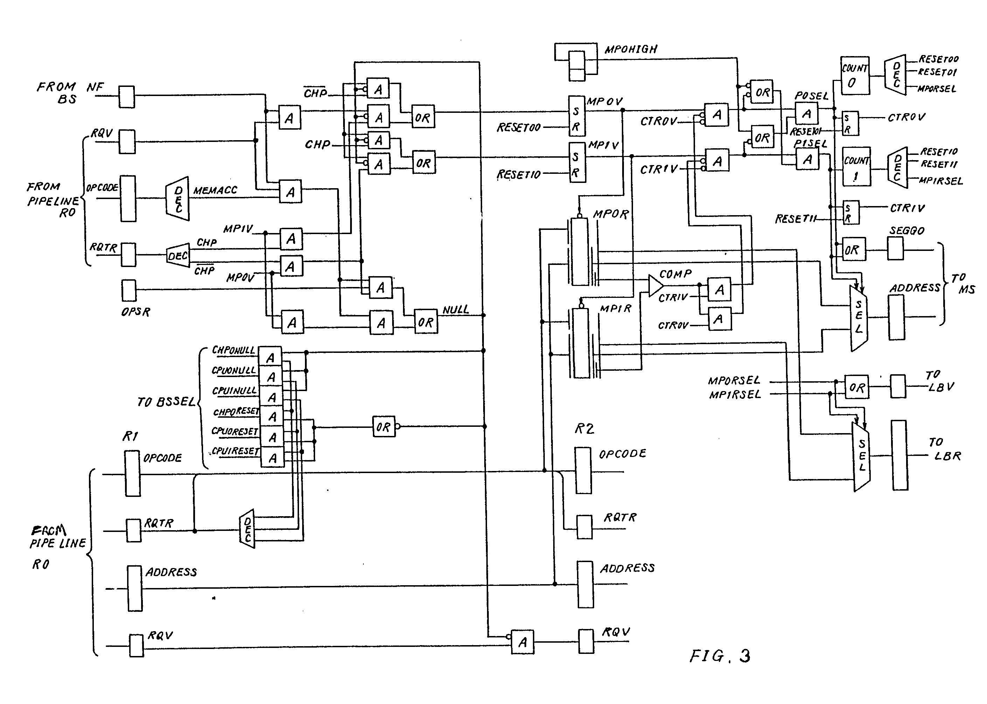

Details of the BS priority determination circuit BP are described with reference to Fig. 2, and the MS priority determination circuit MP and its control logic are described with reference to Fig. 3.

Fig. 2 is a detail block diagram of the BS priority determination circuit BP. In this example, the access units comprise two CPU's (CPU0, CPU1) and one CHP unit (CHP0), and BS is composed of four banks.

The handling of an access (access request) from CHPO will be explained first. An access from CHPO is set in registers CHPOV, CHPOAD, CHPOR, corresponding to ACCOR in Fig. 1. CHPOV sets an effective signal for the access, CHPOAD sets a part of an address for checking busy condition of a BS bank and CHPOR sets an instruction code and address. When an access is set, the contents of CHPOAD are decoded and a busy check of the pertinent bank is carried out. HOACPD is a signal indicating that an access already set to the port is already selected by the priority determination circuit and is being executed, and when this signal becomes "1" an access does not again take part in selection in the priority determination circuit. An access for which the bank to be used is not busy and HOACPD signal is "0" takes part is selection in the priority determination circuit.

In this example, accessed (access requests) which take part in selection in the priority determination circuit include an LB access (loop back access, mainly relating to access processing for data from MS), a CHP0 access, a CPU0 access and a CPU1 access, as described below. The relative priorities of these accesses is fixed in the sequence indicated below:

LB>CHP0>CPU0>CPU1.

A request from the loop back LB is selected first without any conditions. A request from CHP0 is selected under the condition that there is no request from LB. A request from CPU0 is selected under the condition that there is no request from LB and CHP0. A request from CPU1 is selected under the condition that there is no request from LB, CHP0, CPU0.

When an access request is selected by the priority determination circuit BP, HOACPD is set to "1" and the access request information is input to register R0 of the first stage of the pipeline. The information set to R0 includes RQV indicating access validity, OPCODE indicating an operation, RQTR indicating an access operand.

As described below, an access request once selected is sometimes nullified during execution and in such a case the HOACPD is dropped (set back to "0") by the CHPONULL signal (considering an access from CHP0) and thereafter it can take part again in priority determination. Where there is no fear of possibility of nullification, the port may be opened (for a next access request) and therefore in such a case a set clock signal SCLK is given to the port register by a CHPORESET signal and HOACPD is dropped (set to "0"). When the set clock signal SCLK is given to the port register, a next access is set to the port. If there is no next request, the valid signal CHPOV remains OFF and therefore further operation does not occur.

Similar operations are carried out in respect of CPU0, CPU1. In the Figure, A is an AND gate, OR is an OR gate.

An access request input to the pipeline makes access to BS (buffer storage) with its address. When the requested operand is not in BS, such access is set to an MSPORT (MS access port) for the access to MS.

Fig. 3 shows MSPORT control circuit logic and the priority determination circuit MP for MS.

An access set in R0 is shifted to R1. At this time, when a BSNF (not found) signal is sent from BS, MSPORT setting logic is started. In this example, two MSPORT's are used.

In an MSPORT, the OPCODE is decoded and a MEMACC signal, which indicates whether or not such access is to be made to memory is generated. RQTR is also decoded and CHP and $\overline{CHP}$ signals are generated. The CHP signal refers to accesses of which the access requesting of which the access requesting unit is CHP. The $\overline{CHP}$ signal

refers to accesses of which the access requesting unit is not CHP, e.g. is CPU0 or CPU1.

Here, when the signal sent from an operation status register OPSR is "0", a CHP access is first set to MP1 and if MP1 is busy, it is set to MP0. A $\overline{CHP}$ access (an access not from CHP) is first set to MP0 and if MP0 is busy, it is set to MP1. If MP0 and MP1 are busy, a NULL signal is generated from both kinds of access and the access concerned is nullified. This NULL signal is ANDed with the RQV signal sent from R1 to R2, making RQV "0" and is also sent to the second acceptance port (the other MSPORT) as a CHPONULL signal. Thereby the port is initialized and thereby it can take part again in priority determination. When desired data is found in BS or not found and an access request is accepted by MSPORT, the port is released by the CHPORESET signal and a next access can be accepted.

OPSR may be set to a constant value at the time of IPL (Initial Program Loading) of the computer system or it can be set when an overrun occurs from CHP due to a buffer condition in the channel.

When OPSR is "1", accesses from CHP are set in the sequence of MP0, MP1 as in the above case, but an access from $\overline{CHP}$ is set to MP0. If MP0 is already set, the NULL signal is always generated and the access is nullified. This control causes MP0 to be used in common by CHP and $\overline{CHP}$ accesses, whilst MP1 is not used for CPU accesses, but only for CHP accesses.

Accesses set to MSPORT are selected in accordance with priority and then output to MS. The addresses set to MSPORT are compared with bits determined by interleave of MS addresses and thereby a busy check of MS is carried out. MP0V, MP1V are effective signals for MSPORT and when these are "1", MSPORT is busy. CTR0V, CTR1V are signals which are set when accesses to MSPORT art selected in accordance with priority and then sent to MS. These indicate that access has already been sent to MS and that a counter COUNT is effective.

When an access is set to MSPORT, busy check of MS is carried out. This is effected as follows. Namely, when an access is to be sent to MS, the MS bank to which access is requested is busy when the addresses of MSPORT are compared in the comparison circuit COMP and they match. If the result of busy check is ok and the effective signal of counter is "0", the access is input to the priority determination circuit. Priority is judged using an MP0HIGH signal which is inverted in synchronization with a clock. When MP0HIGH is "0", priority of access request of MP1V is high, and when it is "1", priority of access request of MP0V is high. When an access request is selected by the MS priority determination circuit, an address of the corresponding access request is selected and sent to MS. Simultaneously, a corresponding counter is started. The counter counts up in synchronization with the clock. When the counter value reaches a specified value, MP0RSEL, MP1RSEL are generated by a decoder DEC, and OPCODE, RQTR, ADDRESS, etc., are selected. Thereby such signals are sent to the LB port of the BS priority determination circuit (Fig. 2). A RESET signal is generated in response to a value in the counter with such timing that data processing from MS is terminated, and MP0V, MP1V, CTR0V, CTR1V are reset and thereby MSPORT is released.

According to this invention, priority determination for BS access and priority determination for MS access are isolated individually and input port registers are also provided individually. Thereby each access source can issue a next BS access whilst an MS access is being carried out. In the illustrated example, only two MS ports are provided for three access requesting units and they are used in common, but a particular port can alternatively be allocated for use only by a particular access requesting unit, as required. Accordingly, adequate priority can be determined in accordance with urgency of processings at the access requesting units.

## Claims

1. An access control processing system, in a computer system in which a buffer storage (BS), a main storage (MS), and one or more access requesting units (CHP0, CPU0, CPU1) are provided, operable such that if data requested by an access requesting unit is not present in the buffer storage (BS) access is made to the main storage (MS), characterised in that the access control processing system comprises
first registers (ACCOR to ACCnR) operable to hold access requests, from respective access requesting units, for access to the buffer storage (BS),
second registers (MSOR to MSmR) operable to hold access requests for access to the main storage (MS),
a first priority determination circuit (BP), operable to determine priority as between access requests held in the first registers,
a second priority determination circuit (MP), operable to determine priority as between access request held in the second registers,
whereby the second priority determination circuit (MP) determines priority independently of priority determination in the first priority determination circuit (BP), and whereby if the data relating to an access request for access to the buffer storage (BS) is not present in the buffer storage (BS) the access request is transferred from a first register to a second register to make available the thereby vacated first register for a next access request.

2. An access control system as claimed in claim 1, wherein the first registers (ACCOR to ACCnR) are provided in one-to-one correspondence with the access requesting units (CHP0, CPU0, CPU1).

3. An access control processing system as claimed in claim 1 or 2, wherein second registers (MSOR to MSmR), less in number than the access requesting units (CHP0, CPU0, CPU1), are provided for common use, by the access requesting units, each operable to hold access requests from any access requesting unit, and wherein one of the second registers is provided for exclusive use of one access requesting unit, operable to hold access requests from only that one of the access requesting units.

4. An access control processing system as claimed in claim 1 or 2, wherein the second registers (MSOR to MSmR) are, in a first condition, operable so as to be used in common for holding access requests from access requesting units (CHP0, CPU0, CPU1), the system further comprising setting means (OPSR) operable to switch the second registers from the first condition to a second condition in which at least one of the second registers is available only for access requests from a particular access requesting unit.

## Patentansprüche

1. Zugriffssteuerungs-Verarbeitungssystem, in einem Computersystem, in dem ein Pufferspeicher (BS), ein Hauptspeicher (MS) und ein oder mehrere Zugriffsanforderungseinheiten (CHP0, CPU0, CPU1) vorgesehen sind, welches so betreibbar ist, daß dann, wenn Daten, die von einer Zugriffsanforderungseinheit angefordert werden, nicht in dem Pufferspeicher (BS) vorhanden sind, der Zugriff zu dem Hauptspeicher (MS) durchgeführt wird, dadurch gekennzeichnet, daß das Zugriffssteuerungs-Verarbeitungssystem umfaßt
erste Register (ACCOR bis ACCnR), die betreibbar sind, um Zugriffsanforderungen, von entsprechenden Zugriffsanforderungseinheiten, zum Zugriff zu dem Pufferspeicher (BS) zu halten,
zweite Register (MSOR bis MSmR), die betreibbar sind, um Zugriffsanforderungen zu dem Hauptspeicher (MS) zu halten,
eine erste Prioritätbestimmungsschaltung (BP), die betreibbar ist, um die Priorität zwischen Zugriffsanforderungen, die in den ersten Speichern gehalten werden, zu bestimmen,
eine zweite Prioritätsbestimmungsschaltung (MP), die betreibbar ist, um die Priorität zwischen Zugriffsanforderungen, die in den zweiten Registern gehalten werden, zum bestimmen,
wodurch die zweite Prioritätsbestimmungsschaltung (MP) die Priorität unabhängig von der Prioritätsbestimmung in der ersten Prioritätsbestimmungsschaltung (BP) bestimmt, und wodurch dann, wenn Daten bezüglich einer Zugriffsanforderung für den Zugriff zu dem Pufferspeicher (BS) in dem Pufferspeicher (BS) nicht vorhanden sind, die Zugriffsanforderung von einem ersten Register zu einem zweiten Register übertragen wird, um das dadurch freigemachte erste Register für eine nächste Zugriffsanforderung verfügbar zu machen.

2. Zugriffssteuerungssystem nach Anspruch 1, bei dem die ersten Register (ACCOR bis ACCnR) in einer eins-zu-eins-Entsprechung mit den Zugriffsanforderungseinheiten (CHP0, CPU0, CPU1) vorgesehen sind.

3. Zugriffssteuerungs-Verarbeitungssystem nach Anspruch 1 oder 2, dadurch gekennzeichnet, daß die zweiten Register (MSOR bis MSmR), deren Anzahl kleiner als die Zugriffsanforderungseinheiten (CHP0, CPU0, CPU1) ist, zur gemeinsamen Verwendung durch die Zugriffsanforderungseinheiten vorgesehen sind, welche jeweils betreibbar sind, um Zugriffsanforderungen von irgendeiner Zugriffsanforderungseinheit zu halten, und bei dem eines der zweiten Register für die ausschließliche Verwendung von einer Zugriffsanforderungseinheit vorgesehen ist, welches betreibbar ist, um Zugriffsanforderungen von lediglich jener einen Zugriffsanforderungseinheit zu halten.

4. Zugriffssteuerungs-Verarbeitungssystem nach Anspruch 1 oder 2, bei dem die zweiten Register (MSOR bis MSmR), in einem ersten Zustand, betreibbar sind, um gemeinsam zum Halten von Zugriffsanforderungen von Zugriffsanforderungseinheiten (CHP0, CPU0, CPU1) zu halten, und das System ferner Setzeinrichtungen (OPSR) umfaßt, die betreibbar sind, un die zweiten Register von dem ersten Zustand in einen zweiten Zustand zu schalten, in welchem wenigstens eines der zweiten Register lediglich für die Zugriffsanforderungen von einer besonderen Zugriffsanforderungseinheit verfügbar ist.

**Revendications**

1. Système de traitement de contrôle d'accès dans lequel une mémoire tampon (BS), une mémoires centrale (MS), et une ou plusieurs unités demandant un accès (CHP0, CPU0, CPU1) sont prévues, pouvant êtres mis en fonctionnement de telle sorte que, si des données demandées par une unité demandant un accès ne sont pas présentes dans la mémoire tampon (BS), un accès est fait à la mémoire centrale (MS), caractérisé en ce que le système de traitement de contrôle d'accès comprend:

des premiers registres (ACCOR à ACCnR) pouvant être mis en fonctionnement pour maintenir des demandes d'accès, provenant des unités demandant un accès respectives, pour avoir accès à la mémoire tampon (BS),

des deuxièmes registres (MSOR à MSmR) pouvant être mis en fonctionnement pour maintenir des demandes d'accès pour un accès à la mémoire centrale (MS),

un premier circuit de détermination de priorité (BP) pouvant être mis en fonctionnement pour déterminer une priorité entre des demandes d'accès contenues dans les premiers registres,

un deuxième circuit de détermination de priorité (MP), pouvant être mis en fonctionnement pour déterminer une priorité entre des demandes d'accès contenues dans les deuxièmes registres,

le deuxième circuit de détermination de priorité (MP) déterminant de la sorte un priorité indépendamment d'une détermination de priorité dans le premier circuit de détermination de priorité (BP), et, de la sorte, si les données relatives à une demande d'accès pour avoir accès à la mémoire tampon (BS) ne sont pas présentes dans la mémoire tampon (BS), la demande d'accès est transférée d'un premier registre à un deuxième registre pour rendre disponible le premier registre ainsi vidé pour une demande d'accès suivante.

2. Système de contrôle d'accès selon la revendication 1, dans lequel les premiers registres (ACCOR à ACCnR) sont prévus dans une correspondance univoque avec les unités demandant un accès (CHP0, CPU0, CPU1).

3. Système de traitement de contrôle d'accès selon l'une quelconque des revendications 1 et 2, dans lequel les deuxièmes registres (MSOR à MSmR), inférieurs en nombre aux unités demandant un accès (CHP0, CPU0, CPU1), sont prévus pour un usage commun, par les unités demandant un accès, chacun pouvant être mis en fonctionnement pour maintenir des demandes d'accès provenant de n'importe quelle unité demandant un accès, et dans lequel un des deuxièmes registres est prévu pour un usage exclusif d'une unité demandant un accès, pouvant être mis en fonctionnement pour maintenir des demandes d'accès provenant uniquement de cette unité demandant un accès.

4. Système de traitement de contrôle d'accès selon l'une quelconque des revendications 1 et 2, dans lequel les deuxièmes registres (MSOR à MSmR) peuvent être mis en fonctionnement, dans un premier état, de manière à être utilisés en commun pour maintenir des demandes d'accès provenant des unités demandant un accès (CHP0, CPU0, CPU1), le système comprenant en outre un moyen de positionnement (OPSR) pouvant être mis en fonctionnement pour faire passer les deuxièmes registres du premier état à un second état dans lequel au moins un des deuxièmes registres n'est disponible que pour les demandes d'accès provenant d'une unité demandant un accès particulière.

FIG. 1

FIG. 2

FIG. 3